# EUROPÄISCHE PATENTSCHRIFT

(11) **EP 3 583 672 B1**
(45) Veröffentlichungstag und Bekanntmachung des Hinweises auf die Patenterteilung: **06.01.2021**
(21) Anmeldenummer: 18716524.6
(22) Anmeldetag: 20.03.2018
(51) Int. Cl.: H02J 1/06, H02J 1/10

(54) **EFFIZIENTE VORLADUNG VON ABSCHNITTEN EINES GLEICHSPANNUNGSNETZES**
EFFICIENT PRE-CHARGING OF SECTIONS OF A DC NETWORK
PRÉCHARGE EFFICACE DE SECTIONS D'UN RÉSEAU DE TENSION CONTINU

(30) Priorität: 23.03.2017 EP 17162603
(43) Veröffentlichungstag der Anmeldung: 25.12.2019
(73) Patentinhaber: Siemens Aktiengesellschaft, 80333 München (DE)
(72) Erfinder: SCHIERLING, Hubert, 91052 Erlangen (DE)
(86) Internationale Anmeldenummer: PCT/EP2018/056941
(87) Internationale Veröffentlichungsnummer: WO 2018/172313

(56) Entgegenhaltungen:
- EP-A2- 2 595 293
- US-A1- 2013 119 903

## Beschreibung

Die vorliegende Erfindung geht aus von einer Vorladeschaltung für eine Mehrzahl von Abschnitten eines Gleichspannungsnetzes, die über ein jeweiliges Schaltorgan einzeln oder gruppenweise miteinander verbindbar und voneinander trennbar sind.

Die vorliegende Erfindung geht weiterhin aus von einem Gleichspannungsnetz,
- wobei das Gleichspannungsnetz eine Mehrzahl von Abschnitten aufweist,
- wobei das Gleichspannungsnetz für die Abschnitte jeweils ein Schaltorgan aufweist, über das der jeweilige Abschnitt mit den anderen Abschnitten verbindbar und von ihnen trennbar ist,
- wobei das Gleichspannungsnetz eine derartige Vorladeschaltung aufweist.

Innerhalb geschlossener Systeme (beispielsweise innerhalb von Fabrikanlagen) werden zur Energieverteilung in vielen Fällen Gleichspannungsnetze eingesetzt. Die Energieverteilung durch Gleichspannung hat gegenüber einer Energieverteilung durch Wechselspannung einige Vorteile. Beispielsweise ist der Energieaustausch zwischen einzelnen Abschnitten des Netzes einfacher. Insbesondere muss keine Abstimmung von Frequenz und Phasenlage der einzelnen Abschnitte aufeinander erfolgen.

Ein derartiges Gleichspannungsnetz besteht in der Regel aus einer Mehrzahl von Abschnitten, die jeweils durch ein Schaltorgan voneinander getrennt und miteinander verbunden werden können. Die Abschnitte können die verschiedensten Energiequellen (beispielsweise eine Photovoltaikanlage) oder Energiespeicher (beispielsweise Batterien) und die verschiedensten Verbraucher aufweisen. Oftmals besteht auch über einen Umrichter eine Anbindung an ein das Gleichspannungsnetz speisendes Drehspannungsnetz. Auch die Anbindung an das Drehspannungsnetz kann als Abschnitt im Sinne der vorliegenden Erfindung angesehen werden.

Wenn das Gleichspannungsnetz heruntergefahren ist oder vom Drehstromnetz getrennt ist oder wenn verschiedene Abschnitte des Gleichspannungsnetzes voneinander getrennt sind, kann die Situation auftreten, dass die einzelnen Abschnitte voneinander verschiedene Spannungen aufweisen. Die Abschnitte dürfen in einem derartigen Fall nicht ohne weiteres zusammengeschaltet werden, da dies zumindest kurzzeitig extrem hohe Ausgleichsströme zur Folge hätte.

Um die Ausgleichsströme niedrig zu halten oder nach Möglichkeit sogar ganz zu vermeiden, können die Abschnitte kapazitive Energiespeicher aufweisen, die vor dem Verbinden eines jeweiligen Abschnitts mit den anderen Abschnitten vorgeladen werden. Die Spannung des jeweiligen Abschnitts wird dadurch soweit an die Spannung der anderen Abschnitte angeglichen, dass das Verbinden des jeweiligen Abschnitts mit den anderen Abschnitten nur noch zu einem geringen Ausgleichsstrom führt.

Im Stand der Technik werden zum Vorladen der kapazitiven Energiespeicher Vorladeschaltungen verwendet. Üblicherweise ist zum Vorladen des kapazitiven Energiespeichers dem Schaltorgan für den jeweiligen Abschnitt eine jeweilige Vorladeschaltung parallel geschaltet. Die Vorladeschaltung besteht in der Regel aus einer Reihenschaltung eines elektronischen oder elektromechanischen Schalters und eines Widerstands.

Diese Lösung des Standes der Technik weist verschiedene Nachteile auf. So ist zunächst für jeden Abschnitt eine eigene Vorladeschaltung erforderlich. Weiterhin fallen beim Vorladen im Widerstand elektrische Verluste an. Weiterhin muss die Leistungsfähigkeit des Widerstands sowohl bezüglich des maximalen Ladestroms als auch bezüglich der in dem Widerstand anfallenden Verlustleistung an den jeweils zu ladenden Abschnitt des Gleichspannungsnetzes angepasst sein.

Eine weitere Lösung des Standes der Technik ist das Vorladen eines Abschnitts durch eine Spannungsquelle, beispielsweise einen AC/DC-Wandler oder einen DC/DC-Wandler. In diesem Fall können die elektrischen Verluste zwar reduziert werden. Es ist jedoch weiterhin für jeden Abschnitt ein regelbarer Wandler erforderlich. Die Wandler müssen aus demjenigen Abschnitt gespeist werden, der die erforderliche Energie liefern soll. Die Konfiguration ist somit für jedes Gleichspannungsnetz speziell festzulegen. Die Leistungsfähigkeit des Wandlers muss auf die Erfordernisse des vorzuladenden Abschnitts und des den vorzuladenden Abschnitt speisenden Abschnitts abgestimmt sein. Die EP 2 595 293 A2 offenbart einen Leistungsumrichter mit einem Vorladesystem für mehrere Gleichspannungsabgänge, wobei der Ladungsausgleich für Vorladung der Gleichspannungsabgänge wechselstromseitig erfolgt.

Die Aufgabe der vorliegenden Erfindung besteht darin, Möglichkeiten zu schaffen, mittels derer die Vorladung der Abschnitte einfach, effizient und kostengünstig realisiert werden kann.

Die Aufgabe wird durch eine Vorladeschaltung mit den Merkmalen des Anspruchs 1 gelöst. Vorteilhafte Ausgestaltungen der erfindungsgemäßen Vorladeschaltung sind Gegenstand der abhängigen Ansprüche 2 bis 5.

Erfindungsgemäß wird eine Vorladeschaltung der eingangs genannten Art durch die Merkmale von Anspruch 1 ausgestaltet.

Durch diese Ausgestaltung wird erreicht, dass immer dann, wenn die Schalteinrichtung den Energieübertragungspfad leitend schaltet, der an den Energieübertragungspfad angekoppelte Abschnitt mit der niedrigsten Spannung - und nur dieser Abschnitt - aus dem an den Energieübertragungspfad angekoppelten Abschnitt mit der höchsten Spannung - und nur aus diesem Abschnitt - vorgeladen wird.

Vorzugsweise ist der Energieübertragungspfad als induktiver Energieübertragungspfad ausgebildet. Dadurch kann eine effiziente und verlustarme Energieübertragung von dem einen Abschnitt zu dem anderen Abschnitt erfolgen.

Es ist möglich, dass über die Diodengruppen jeweils nur eines von zwei Potenzialen des an die jeweilige Diodengruppe angeschlossenen Abschnitts an den Energieübertragungspfad angekoppelt ist. In diesem Fall ist die Schalteinrichtung in dem Energieübertragungspfad angeordnet. Dadurch kann die Schalteinrichtung sehr einfach ausgestaltet werden.

Alternativ ist es möglich, dass über die Diodengruppen jeweils beide Potenziale des an die jeweilige Diodengruppe angeschlossenen Abschnitts an den Energieübertragungspfad angekoppelt sind. In diesem Fall ist der Energieübertragungspfad von den Diodengruppen galvanisch getrennt und die Schalteinrichtung weist mehrere Teilschalteinrichtungen auf, die jeweils einer Diodengruppe zugeordnet sind. Dadurch ergibt sich eine einfache Gestaltung der Schalteinrichtung. Die Vorteile einer galvanischen Trennung sind ohne weiteres ersichtlich.

Es ist möglich, dass die Teilschalteinrichtungen von der Steuereinrichtung individuell angesteuert werden. Vorzugsweise erfolgt jedoch eine einheitliche Ansteuerung. Diese Ausgestaltung vereinfacht den Aufbau und die Steuerung der Vorladeschaltung.

Vorzugsweise schalten die Teilschalteinrichtungen den an die jeweilige Diodengruppe angeschlossenen Abschnitt aufgrund des von der Steuereinrichtung übermittelten Steuersignals nach Art eines Wechselrichters an den Energieübertragungspfad an. Dadurch ist eine einfache Art und Weise der Energieübertragung möglich.

In einer besonders bevorzugten Ausgestaltung der Vorladeschaltung sind dem Energieübertragungspfad ein Widerstand und eine dem Widerstand zugeordnete weitere Schalteinrichtung zugeordnet, so dass der Energieübertragungspfad bei geschlossener weiterer Schalteinrichtung als Verbraucher wirkt. Dadurch kann die Vorladeschaltung bei Bedarf auch als Entladeschaltung für die Abschnitte genutzt werden.

Die Aufgabe wird weiterhin durch ein Gleichspannungsnetz mit den Merkmalen des Anspruchs 6 gelöst. Vorteilhafte Ausgestaltungen des erfindungsgemäßen Gleichspannungsnetzes sind Gegenstand der abhängigen Ansprüche 7 bis 9.

Erfindungsgemäß wird ein Gleichspannungsnetz der eingangs genannten Art dadurch ausgestaltet,
- dass die Vorladeschaltung als erfindungsgemäße Vorladeschaltung ausgebildet ist und
- dass die Abschnitte des Gleichspannungsnetzes jeweils mit mindestens einer der Diodengruppen der Vorladeschaltung verbunden sind.

Es ist möglich, dass zumindest ein Teil der Schaltorgane derart ausgebildet ist, dass sie je nach Schaltzustand des jeweiligen Schaltorgans nur eines von zwei Potenzialen der Abschnitte voneinander trennen bzw. miteinander verbinden und das andere Potenzial der Abschnitte permanent miteinander verbinden. Ebenso ist es möglich, dass zumindest ein Teil der Schaltorgane derart ausgebildet ist, dass sie je nach Schaltzustand des jeweiligen Schaltorgans beide Potenziale der Abschnitte voneinander trennen bzw. miteinander verbinden. Die beiden Gestaltungen schließen sich zwar für ein einzelnes Schaltorgan gegenseitig aus. Von mehreren Schaltorganen kann jedoch ein Teil gemäß der erstgenannten Ausgestaltung und ein hierzu komplementärer Teil gemäß der zweitgenannten Ausgestaltung ausgebildet sein.

Vorzugsweise ist vorgesehen,
- dass die Schaltorgane jeweils eine elektronische Schalteranordnung und von der elektronischen Schalteranordnung aus gesehen zumindest zum jeweils zugeordneten Abschnitt hin einen elektromechanischen Schalter aufweisen,
- dass zwischen der jeweiligen elektronischen Schaltanordnung und dem jeweiligen elektromechanischen Schalter ein jeweiliger Abgriff angeordnet ist und
- dass die Abschnitte über die Abgriffe mit den Diodengruppen der Vorladeschaltung verbunden sind.

Durch diese Ausgestaltung ist es insbesondere auf besonders einfache Weise möglich, durch entsprechende Ansteuerung der elektromechanischen Schalter einzustellen, welche Abschnitte tatsächlich von der Vorladeschaltung vorgeladen werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Gleichspannungsnetz mit mehreren Abschnitten,
- FIG 2: eine mögliche Ausgestaltung eines Schaltorgans,
- FIG 3: eine weitere mögliche Ausgestaltung eines Schaltorgans,
- FIG 4: eine mögliche Ausgestaltung einer Vorladeschaltung und
- FIG 5: eine weitere mögliche Ausgestaltung einer Vorladeschaltung.

Die vorliegende Erfindung betrifft - allgemein gesprochen - einen elektrotechnischen Sachverhalt. Begriffe wie "verbunden" und "getrennt" oder "isoliert" und dergleichen sind daher stets im elektrischen Sinne gemeint, nicht im mechanischen Sinne.

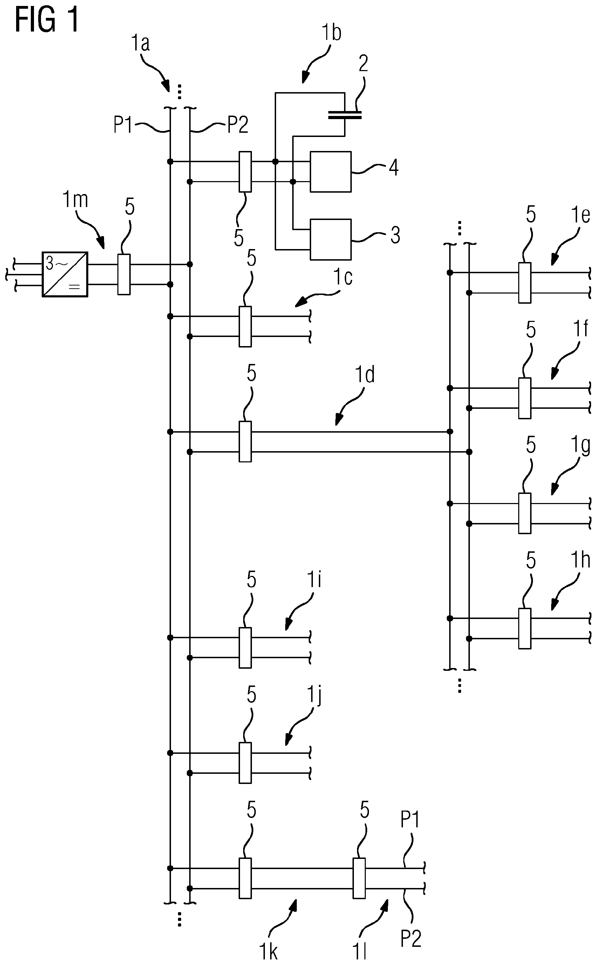

Gemäß FIG 1 weist ein Gleichspannungsnetz eine Vielzahl von Abschnitten 1 auf. Die Abschnitte 1 sind in der Darstellung von FIG 1 zusätzlich mit einem einzelnen kleinen Buchstaben ergänzt. Wenn nachfolgend auf einen ganz bestimmten der in FIG 1 dargestellten Abschnitte 1 Bezug genommen wird, wird das durch den entsprechenden kleinen Buchstaben ergänzte Bezugszeichen verwendet, also beispielsweise das Bezugszeichen 1c oder das Bezugszeichen 1f. Wenn hingegen lediglich allgemein auf die Abschnitte 1 Bezug genommen wird, wird nur das Bezugszeichen 1 ohne Ergänzung durch einen kleinen Buchstaben verwendet.

In der Regel weist das Gleichspannungsnetz einen Zentralabschnitt auf. In der Darstellung von FIG 1 ist dies der Abschnitt 1a. Der Zentralabschnitt 1a stellt die "Nabe" für die anderen Abschnitte 1 dar. Der Zentralabschnitt 1a ist also für die anderen Abschnitte 1 gemeinsam.

Wie aus FIG 1 ersichtlich ist, können die Abschnitte 1 ähnlich einer Baumstruktur Verzweigungen und Verästelungen bilden. Beispielsweise ist der Abschnitt 1d in sich in weitere Abschnitte 1e bis 1h unterteilt. Auch können mehrere Abschnitte 1 hintereinander geschaltet sein. In der Darstellung von FIG 1 sind dies die Abschnitte 1k und 11. Der "Abschnitt" 1m stellt die Anbindung des Zentralabschnitts 1a an ein Wechselstromnetz - hier ein Drehstromnetz - dar.

Die Art der Abschnitte 1 als solche kann nach Bedarf bestimmt sein. Sie weisen jedoch in der Regel jeweils einen elektrischen Energiespeicher 2 auf. Der Energiespeicher 2 kann beispielsweise eine Batterie oder ein Kondensator sein. Die Abschnitte 1 weisen meistens weiterhin mindestens eine Energiequelle 3 und/oder mindestens einen Verbraucher 4 auf. Ein Beispiel einer Energiequelle 3 ist eine Photovoltaikanlage oder eine (geladene) Batterie. Beispiele von Verbrauchern 4 sind ein elektrischer Antrieb, eine Heizeinrichtung und eine (ungeladene) Batterie. Es können aber auch andere Energiequellen 3 und andere Verbraucher 4 vorhanden sein. Auch Kombinationen sind möglich. Aus Gründen der Übersichtlichkeit sind in FIG 1 nur für einen der Abschnitte 1 der Energiespeicher 2, die Energiequelle 3 und der Verbraucher 4 eingezeichnet. Die entsprechenden Einheiten 2, 3 und 4 können aber auch bei den anderen Abschnitten 1 vorhanden sein.

Das Gleichspannungsnetz weist für die Abschnitte 1 jeweils ein Schaltorgan 5 auf. Über das jeweilige Schaltorgan 5 kann - je nach Ansteuerung des jeweiligen Schaltorgans 5 - der jeweilige Abschnitt 1 mit mindestens einem anderen Abschnitt 1 verbunden und von dem mindestens einen anderen Abschnitt 1 getrennt werden. Im Ergebnis ergibt sich dadurch, dass die Abschnitte 1b bis 11 direkt oder indirekt über andere Abschnitte 1 mit dem Zentralabschnitt 1a verbunden werden können bzw. von ihm getrennt werden können. Beispielsweise bewirkt das Verbinden bzw. das Trennen des Schaltorgans 5 des Abschnitts 1f das Verbinden bzw. das Trennen des Abschnitts 1f mit dem bzw. von dem Abschnitt 1d. Je nach Schaltzustand des Schaltorgans 5 für den Abschnitt 1d wird damit der Abschnitt 1f über den Abschnitt 1d mit dem Zentralabschnitt 1a verbunden bzw. von ihm getrennt oder ohne weitergehende Verbindung zum Zentralabschnitt 1a nur mit dem Abschnitt 1d verbunden bzw. von ihm getrennt.

Aufgrund der Ausgestaltung als Gleichspannungsnetz weisen die Abschnitte 1 ein positives Potenzial P1 und ein negatives Potenzial P2 auf. Aus Gründen der Übersichtlichkeit sind in FIG 1 die Potenziale P1, P2 nur für die Abschnitte 1a und 1f eingezeichnet. Leitungen der Abschnitte 1, die gleichartige Potenziale P1, P2 aufweisen, können über die Schaltorgane 5 miteinander verbunden werden, also beispielsweise das positive Potenzial P1 eines der Abschnitte 1 mit den positiven Potenzialen P1 der anderen Abschnitte 1 und ebenso das negative Potenzial P2 dieses Abschnitts 1 mit den negativen Potenzialen P2 der anderen Abschnitte 1. Eine Verbindung "über Kreuz", also beispielsweise des positiven Potenzials P1 des Zentralabschnitts 1a mit dem negativen Potenzial P2 eines der anderen Abschnitte 1, ist hingegen nicht zulässig.

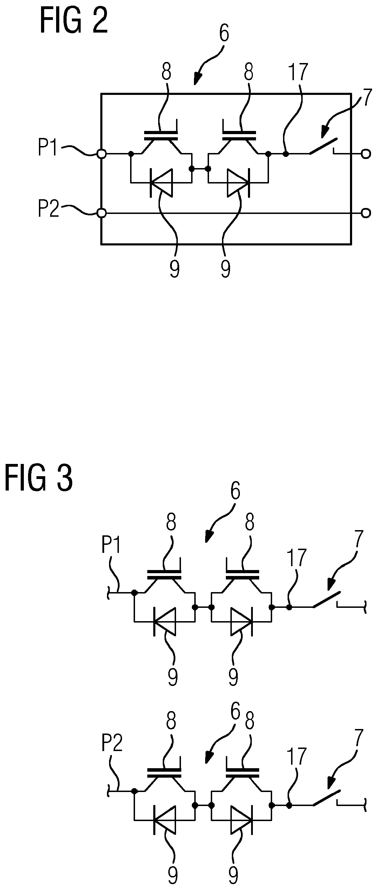

Im einfachsten Fall sind die Schaltorgane 5 entsprechend FIG 2 ausgebildet. Gemäß FIG 2 ist das jeweilige Schaltorgan 5 derart ausgebildet ist, dass es - je nach Schaltzustand - nur das positive Potenzial P1 des jeweiligen Abschnitts 1 vom positiven Potenzial P1 der anderen Abschnitte 1 trennt bzw. mit dem positiven Potenzial P1 der anderen Abschnitte 1 verbindet. Die negativen Potenziale P2 der Abschnitte 1 hingegen sind permanent miteinander verbunden. Im Falle der Ausgestaltung gemäß FIG 2 erfolgt also gegebenenfalls nur eine einpolige Trennung des jeweiligen Abschnitts 1 von den anderen Abschnitten 1. Es ist somit nur ein (1) Schaltpfad vorhanden. Ohne Beschränkung der Allgemeinheit kann hierbei stets angenommen werden, dass das positive Potenzial P1 das geschaltete Potenzial ist, während das negative Potenzial P2 ungeschaltet ist. Prinzipiell ist jedoch auch die umgekehrte Vorgehensweise möglich.

Alternativ sind die Schaltorgane 5 entsprechend FIG 3 ausgebildet. Gemäß FIG 3 ist das jeweilige Schaltorgan 5 derart ausgebildet ist, dass es - je nach Schaltzustand - sowohl das positive Potenzial P1 des jeweiligen Abschnitts 1 vom positiven Potenzial P1 der anderen Abschnitte 1 trennt bzw. mit dem positiven Potenzial P1 der anderen Abschnitte 1 verbindet als auch das negative Potenzial P2 des jeweiligen Abschnitts 1 vom negativen Potenzial P2 der anderen Abschnitte 1 trennt bzw. mit dem negativen Potenzial P2 der anderen Abschnitte 1 verbindet. Im Falle der Ausgestaltung gemäß FIG 3 erfolgt also gegebenenfalls eine zweipolige Trennung des jeweiligen Abschnitts 1 von den anderen Abschnitten 1. Es ist somit zwei Schaltpfade vorhanden.

Es ist möglich, dass alle Schaltorgane 5 einheitlich und gleichartig ausgebildet sind, also entweder alle nur eine einpolige Trennung des jeweiligen Abschnitts 1 von den anderen Abschnitten 1 realisieren oder alle eine zweipolige Trennung des jeweiligen Abschnitts 1 von den anderen Abschnitten 1 realisieren. Es sind aber auch Mischformen möglich, dass also ein Teil der Schaltorgane 5 eine einpolige Trennung des jeweiligen Abschnitts 1 von den anderen Abschnitten 1 realisiert und ein anderer Teil der Schaltorgane 5 eine zweipolige Trennung des jeweiligen Abschnitts 1 von den anderen Abschnitten 1 realisiert. Beispielsweise können die Schaltorgane 5 für die Abschnitte 1e bis 1h jeweils eine zweipolige Trennung bewirken, während die Schaltorgane 5 der Abschnitte 1a bis 1d und 1i bis 1m nur eine einpolige Trennung bewirken.

Die Schaltorgane 5 weisen entsprechend der Darstellung in den FIG 2 und 3 in der Regel für jeden Schaltpfad jeweils eine elektronische Schalteranordnung 6 auf. Weiterhin weisen die Schaltorgane 5, von der elektronischen Schalteranordnung 6 aus gesehen, zumindest zum jeweils zugeordneten Abschnitt 1 hin einen elektromechanischen Schalter 7 auf. Die jeweilige elektronische Schalteranordnung 6 und der jeweilige elektromechanische Schalter 7 sind somit in Reihe geschaltet. Gegebenenfalls kann auch eine Reihenschaltung von zwei elektromechanischen Schaltern 7 und einer elektronischen Schalteranordnung 6 vorhanden sein. In diesem Fall ist die elektronische Schalteranordnung 6 in der Mitte der Reihenschaltung angeordnet. Die elektronische Schalteranordnung 6 kann beispielsweise aus zwei in Reihe geschalteten elektronischen Schaltern 8 bestehen, denen jeweils eine Diode 9 parallel geschaltet ist. Die beiden Dioden 9 sind in diesem Fall antiparallel zueinander gepolt. Unabhängig von der Ansteuerung der beiden elektronischen Schalter 8 sperrt somit stets eine der beiden Dioden 9. Die elektronischen Schalter 8 können beispielsweise entsprechend der Darstellung in den FIG 2 und 3 als IGBTs ausgebildet sein. Es sind jedoch auch andere Ausgestaltungen möglich, beispielsweise als MOSFETs. Die Dioden 9 können intrinsische Bestandteile der elektronischen Schalter 8 sein. Alternativ kann es sich um eigenständige elektronische Bauelemente handeln.

Solange die Abschnitte 1 miteinander verbunden sind, sind die positiven Potenziale P1 untereinander gleich und auch die negativen Potenziale P2 untereinander gleich. Auch der Potenzialunterschied U zwischen den positiven und negativen Potenzialen P1 und P2 ist damit für die Abschnitte 1 derselbe. Die Spannung U sollte nach Möglichkeit gleich einem Nennwert ein. Der Nennwert kann nach Bedarf gewählt sein. Er kann beispielsweise bei 24 V, bei 100 V, bei 500 V oder einem anderen geeigneten Wert liegen. Wenn die Abschnitte 1 voneinander getrennt sind, ist im Falle der einpoligen Trennung das negative Potenzial P2 immer noch für die Abschnitte 1 dasselbe. Das positive Potenzial P1 kann in diesem Fall hingegen für die Abschnitte 1 bzw. gegebenenfalls Gruppen von Abschnitten 1 individuelle Werte aufweisen. Im Falle der zweipoligen Trennung gilt dies zusätzlich auch für das negative Potenzial P2. In beiden Fällen - also sowohl bei der einpoligen Trennung als auch bei der zweipoligen Trennung - kann die Spannung U jedoch individuell für den jeweiligen Abschnitt 1 bzw. die jeweilige Gruppe von Abschnitten 1 jeweils einen eigenen Wert aufweisen.

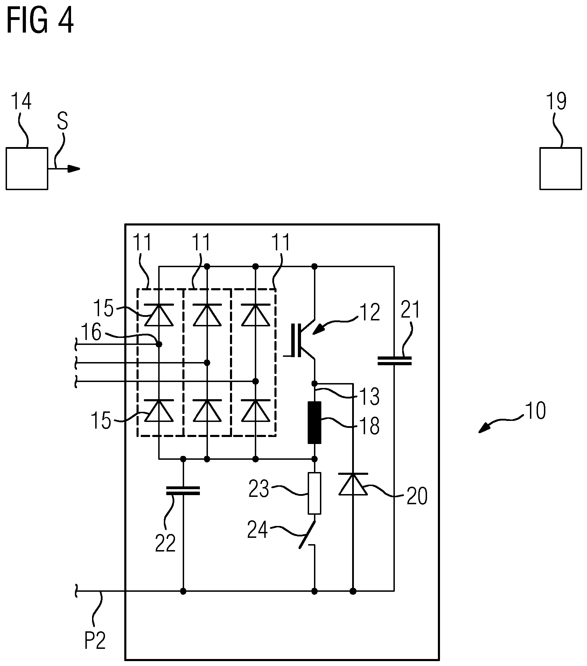

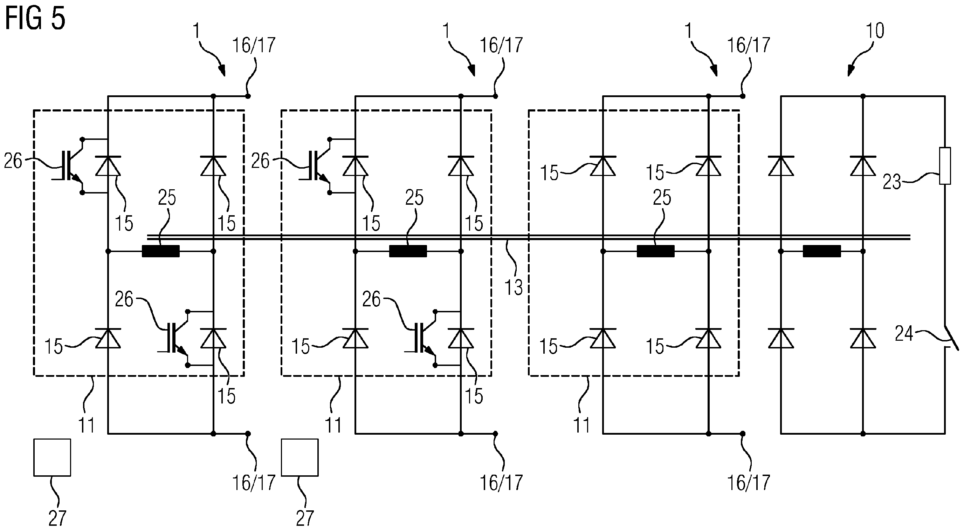

Wenn die Spannung U eines Abschnitts 1 von der Spannung U eines anderen Abschnitts 1 abweicht, dürfen die entsprechenden Abschnitte 1 nicht ohne weiteres über eines der Schaltorgane 5 geschaltet werden. Zum vorherigen Ausgleich derartiger Spannungsunterschiede weist das Gleichspannungsnetz daher eine Vorladeschaltung 10 auf. Nachfolgend werden in Verbindung mit den FIG 4 und 5 zwei mögliche Ausgestaltungen der Vorladeschaltung 10 erläutert.

Die Vorladeschaltung 10 von FIG 4 weist Diodengruppen 11, eine Schalteinrichtung 12, einen Energieübertragungspfad 13 und eine Steuereinrichtung 14 auf. Die Anzahl an Diodengruppen 11 kann nach Bedarf bestimmt sein. Die in FIG 4 dargestellte Anzahl von drei Diodengruppen 11 ist rein beispielhaft. Die Abschnitte 1 des Gleichspannungsnetzes sind jeweils mit mindestens einer der Diodengruppen 11 der Vorladeschaltung 10 verbunden. Über die jeweilige Diodengruppe 11 sind die Abschnitte 1 des Gleichspannungsnetzes an den Energieübertragungspfad 13 angekoppelt.

Der Energieübertragungspfad 13 ist für die Diodengruppen 11 und damit auch für die Abschnitte 1 einheitlich derselbe.

Die Diodengruppen 11 zum Ankoppeln jeweils eines einzelnen Abschnitts 1 an den Energieübertragungspfad 13 können bei der Ausgestaltung gemäß FIG 4 beispielsweise jeweils aus einer Reihenschaltung von jeweils zwei Dioden 15 bestehen. Der jeweilige Abschnitt 1 wird in diesem Fall mit einem Knotenpunkt 16 verbunden, der zwischen den beiden Dioden 15 der jeweiligen Diodengruppe 11 angeordnet ist. Die Bezugszeichen für die Dioden 15 und den Knotenpunkt 16 sind in FIG 4 nur für eine Diodengruppe 11 eingezeichnet.

Zum Verbinden der Abschnitte 1 des Gleichspannungsnetzes mit den Diodengruppen 11 der Vorladeschaltung 10 können die Schaltorgane 5 der Abschnitte 1 entsprechend der Darstellung in den FIG 2 und 3 jeweils einen Abgriff 17 aufweisen, der zwischen der jeweiligen elektronischen Schaltanordnung 6 und dem jeweiligen elektromechanischen Schalter 7 des jeweiligen Schaltpfades angeordnet ist. In diesem Fall können die Abschnitte 1 über den jeweiligen Abgriff 17 mit dem Knotenpunkt 16 der jeweiligen Diodengruppe 11 verbunden sein. Falls die Schaltpfade der Schaltorgane 5, jeweils von der elektronischen Schalteranordnung 6 aus gesehen, in beide Richtungen jeweils einen elektromechanischen Schalter 7 aufweisen, weisen die Schaltpfade vorzugsweise auch jeweils zwei Abgriffe 17 auf. Je einer der beiden Abgriffe 17 ist in diesem Fall zwischen der elektronischen Schalteranordnung 6 und dem einen elektromechanischen Schalter 7 und zwischen der elektronischen Schalteranordnung 6 und dem anderen elektromechanischen Schalter 7 angeordnet. Die beiden Abgriffe 17 sind in diesem Fall mit voneinander verschiedenen Diodengruppen 11 der Vorladeschaltung 10 verbunden.

Zum Vorladen von Abschnitten 1, die über ihr jeweiliges Schaltorgan 5 von den anderen Abschnitten 1 getrennt sind, übermittelt die Steuereinrichtung 14 ein Steuersignal S an die Schalteinrichtung 12. Dadurch wird die Schalteinrichtung 12 derart gesteuert, dass sie den Energieübertragungspfad 13 leitend schaltet. Diese Wirkung ergibt sich automatisch für alle an den Energieübertragungspfad 13 angekoppelten Abschnitte 1 des Gleichspannungsnetzes.

Bei der Vorladeschaltung 10 von FIG 4 ist über die Diodengruppen 11 jeweils nur das positive Potenzial P1 der Abschnitte 1 an den Energieübertragungspfad 13 angekoppelt. In diesem Fall kann die Schalteinrichtung 12 in dem Energieübertragungspfad 13 angeordnet sein. Die Schalteinrichtung 12 kann bei der Ausgestaltung gemäß FIG 4 beispielsweise als einfacher elektronischer Schalter ausgebildet sein, insbesondere als IGBT oder als MOSFET.

Wenn die Schalteinrichtung 12 den Energieübertragungspfad 13 leitend schaltet, speist aufgrund der Diodengruppen 11 nur derjenige Abschnitt 1 Energie in den Energieübertragungspfad 13 ein, der das höchste positive Potenzial P1 und damit die höchste Spannung U aufweist. In analoger Weise entnimmt aufgrund der Diodengruppen 11 nur derjenige Abschnitt 1 Energie aus dem Energieübertragungspfad 13, der das niedrigste positive Potenzial P1 und damit die niedrigste Spannung U aufweist. Durch entsprechende Ansteuerung der elektromechanischen Schalter 7 der Schaltorgane 5 kann weiterhin festgelegt werden, welche Abschnitte 1 überhaupt vorgeladen werden können.

In dem Energieübertragungspfad 13 ist ein strombegrenzendes Element 18 angeordnet. Das strombegrenzende Element 18 kann als Widerstand ausgebildet sein. In diesem Fall ist der Energieübertragungspfad 13 als resistiver Energieübertragungspfad ausgebildet. Vorzugsweise ist das strombegrenzende Element 18 jedoch als Drossel ausgebildet. In diesem Fall ist der Energieübertragungspfad 13 als induktiver Energieübertragungspfad ausgebildet.

Im Falle der - bevorzugten - Ausgestaltung des strombegrenzenden Elements 18 als Drossel begrenzt das Element 18 genau genommen nicht den Strom I als solchen, sondern nur dessen Anstieg. Aufgrund des Umstands, dass in dem Energieübertragungspfad 13 von FIG 4 keine nennenswerte Strombegrenzung erfolgt, kann der über den Energieübertragungspfad 13 fließende Strom I somit große Werte annehmen. Vorzugsweise ist daher eine Überwachungseinrichtung 19 vorhanden, welche gegebenenfalls die Schalteinrichtung 12 temporär sperrt. Die Überwachungseinrichtung 19 bewirkt jedoch nicht eine dauerhafte Sperrung der Schalteinrichtung 12, sondern dient lediglich dem Schutz der Vorladeschaltung 10 vor Überlastung. Die Überwachungseinrichtung 19 kann insbesondere eine Strombegrenzung im Energieübertragungspfad 13 und/oder eine Temperaturbegrenzung der Schalteinrichtung 12 bewirken. Die Überwachungseinrichtung 19 kann beispielsweise nach Art eines Stromreglers ausgebildet sein.

Zum Schutz der Vorladeschaltung 10 vor kurzzeitigen Überspannungen beim Sperren der Schalteinrichtung 12 ist weiterhin dem strombegrenzenden Element 18 eine Freilaufdiode 20 parallel geschaltet. Die Freilaufdiode 20 kann beispielsweise ausschließlich das strombegrenzende Element 18 überbrücken. Gemäß FIG 4 ist die Freilaufdiode 20 mit dem negativen Potenzial P2 verbunden.

Oftmals ist weiterhin ein Kondensator 21 vorhanden. Der Kondensator 21 dient der Kommutierung. Er kann so klein dimensioniert sein, dass ein Vorladen des Kondensators 21 nicht erforderlich ist. Alternativ oder zusätzlich kann ein Kondensator 22 vorhanden sein. Der Kondensator 22 dient einer Entkopplung von den intrinsischen Induktivitäten der Eingangsleitungen der Vorladeschaltung 10.

Entsprechend der Darstellung von FIG 4 können dem Energieübertragungspfad 13 zusätzlich ein Widerstand 23 und eine dem Widerstand 23 zugeordnete weitere Schalteinrichtung 24 zugeordnet sein. Aufgrund des Vorhandenseins der Reihenschaltung des Widerstands 23 und der weiteren Schalteinrichtung 24 ist es möglich, die Vorladeschaltung 10 nach Bedarf alternativ zum Vorladen der Abschnitte 1 und zum Entladen der Abschnitte 1 zu verwenden, je nachdem, ob der Widerstand 23 über die weitere Schalteinrichtung 24 mit dem negativen Potenzial P2 verbunden wird oder von ihm getrennt bleibt. Der Energieübertragungspfad 13 kann somit bei geschlossener weiterer Schalteinrichtung 24 als Verbraucher wirken.

Die Ausgestaltung der Vorladeschaltung 10 gemäß FIG 4 ist nur dann möglich, wenn mittels der Schaltorgane 5 der entsprechenden Abschnitte 1 nur eine einpolige Trennung der Abschnitte 1 voneinander erfolgt. Im Gegensatz hierzu ist die Ausgestaltung der Vorladeschaltung 10 gemäß FIG 5 stets realisierbar, also sowohl dann, wenn mittels der Schaltorgane 5 der entsprechenden Abschnitte 1 nur eine einpolige Trennung der Abschnitte 1 voneinander erfolgt, als auch dann, wenn mittels der Schaltorgane 5 der entsprechenden Abschnitte 1 eine zweipolige Trennung der Abschnitte 1 voneinander erfolgt.

Ebenso wie bei der Vorladeschaltung 10 von FIG 4 weist auch die Vorladeschaltung 10 von FIG 5 Diodengruppen 11, eine Schalteinrichtung 12, einen Energieübertragungspfad 13 und eine Steuereinrichtung 14 auf. Die in FIG 5 dargestellte Anzahl von drei Diodengruppen 11 ist wieder rein beispielhaft. Auch hier sind die Abschnitte 1 des Gleichspannungsnetzes jeweils mit mindestens einer der Diodengruppen 11 der Vorladeschaltung 10 verbunden. Über die jeweilige Diodengruppe 11 sind die Abschnitte 1 des Gleichspannungsnetzes an den Energieübertragungspfad 13 angekoppelt. Der Energieübertragungspfad 13 ist für die Diodengruppen 11 und damit auch für die Abschnitte 1 einheitlich derselbe.

Die Diodengruppen 11 zum Ankoppeln jeweils eines einzelnen Abschnitts 1 an den Energieübertragungspfad 13 können bei der Ausgestaltung gemäß FIG 5 beispielsweise jeweils nach Art eines Brückengleichrichters ausgebildet sein. Der jeweilige Abschnitt 1 wird in diesem Fall mit zwei Knotenpunkten 16 verbunden, die an den Ausgängen des Brückengleichrichters angeordnet sind.

Auch im Falle der Ausgestaltung von FIG 5 sind die Abschnitte 1 des Gleichspannungsnetzes jeweils mit mindestens einer der Diodengruppen 11 der Vorladeschaltung 10 verbunden. Insbesondere können auch hier die Schaltorgane 5 der Abschnitte 1 entsprechend der Darstellung in FIG 3 in ihren beiden Schaltpfaden jeweils einen Abgriff 17 aufweisen, der zwischen der jeweiligen elektronischen Schalteranordnung 6 und dem jeweiligen elektromechanischen Schalter 7 des jeweiligen Schaltpfades angeordnet ist. Auch in diesem Fall können die Abschnitte 1 über den jeweiligen Abgriff 17 mit dem Knotenpunkt 16 der jeweiligen Diodengruppe 11 verbunden sein. Im Gegensatz zur Ausgestaltung von FIG 4 können im Falle der Ausgestaltung von FIG 5 jedoch in beiden Schaltpfaden des jeweiligen Schaltorgans 5 Abgriffe 17 vorhanden sein und je einer der beiden Abgriffe 17 mit je einem der beiden Knotenpunkte 16 verbunden sein. Im Falle der Ausgestaltung von FIG 5 sind somit über die Diodengruppen 11 jeweils beide Potenziale P1, P2 der entsprechenden Abschnitte 1 an den Energieübertragungspfad 13 angekoppelt.

Der Energieübertragungspfad 13 ist im Falle der Ausgestaltung von FIG 5 von den Diodengruppen 11 potenzialentkoppelt bzw. galvanisch getrennt. Beispielsweise kann der Energieübertragungspfad 13 im Falle der Ausgestaltung von FIG 5 nach Art eines Transformatorkerns ausgebildet sein, wobei in den Brückenzweigen der Brückengleichrichter Wicklungen 25 angeordnet sind. Dadurch ist der Energieübertragungspfad 13 als induktiver Energieübertragungspfad ausgebildet. Die Wicklungen 25 wirken - je nach Richtung des Energieflusses - als Primärwicklung oder als Sekundärwicklung des Transformators. Die Wicklungen 25 weisen gleiche Wicklungszahlen auf. Es erfolgt daher über die Wicklungen 25 und den Energieübertragungspfad 13 zwar eine Potenzialentkopplung, aber keine Spannungstransformation.

Im Falle der Ausgestaltung von FIG 5 weist die Schalteinrichtung 12 mehrere Teilschalteinrichtungen auf. Die Teilschalteinrichtungen sind jeweils einer Diodengruppe 11 zugeordnet. Sie umfassen jeweils zwei elektronische Schalter 26, die jeweils einer Diode 15 parallel geschaltet sind. Die beiden elektronischen Schalter 26 sind, bezogen auf den Brückengleichrichter, über Kreuz angeordnet. Die elektronischen Schalter 26 können beispielsweise als IGBT oder als MOSFET ausgebildet sein.

Zum Vorladen von Abschnitten 1, die über ihr jeweiliges Schaltorgan 5 von den anderen Abschnitten 1 getrennt sind, übermittelt die Steuereinrichtung 14 wie zuvor ein Steuersignal S an die Schalteinrichtung 12, durch das die Schalteinrichtung 12 derart gesteuert wird, dass sie den Energieübertragungspfad 13 leitend schaltet. Beispielsweise kann das Steuersignal S bewirken, dass die Teilschalteinrichtungen den an die jeweilige Diodengruppe 11 angeschlossenen Abschnitt 1 nach Art eines Wechselrichters an den Energieübertragungspfad 13 anschalten.

Die Teilschalteinrichtungen werden von der Steuereinrichtung 14 vorzugsweise einheitlich angesteuert. Aus Sicht der Steuereinrichtung 14 wird also vorzugsweise weiterhin nur ein einziges Steuersignal S ausgegeben. Wenn die Schalteinrichtung 12 den Energieübertragungspfad 13 leitend schaltet, speist - ebenso wie bei der Ausgestaltung von FIG 4 - nur derjenige Abschnitt 1 Energie in den Energieübertragungspfad 13 ein, der die höchste Spannung U aufweist. In analoger Weise entnimmt nur derjenige Abschnitt 1 Energie aus dem Energieübertragungspfad 13, der die niedrigste Spannung U aufweist. Diese Wirkung ergibt sich automatisch für alle an den Energieübertragungspfad 13 angekoppelten Abschnitte 1 des Gleichspannungsnetzes. Wie zuvor kann durch entsprechende Ansteuerung der elektromechanischen Schalter 7 der Schaltorgane 5 festgelegt werden, welche Abschnitte 1 überhaupt vorgeladen werden können.

Zum Schutz der Vorladeschaltung 10 vor Überlastung sind den Teilschalteinrichtungen vorzugsweise Überwachungseinrichtungen 27 zugeordnet. Die Überwachungseinrichtungen 27 wirken nur auf die jeweilige Teilschalteinrichtung und sperren diese gegebenenfalls temporär. Die Überwachungseinrichtungen 27 bewirken jedoch nicht eine dauerhafte Sperrung der jeweiligen Teilschalteinrichtung, sondern dient lediglich dem Schutz der jeweiligen Teilschalteinrichtung vor Überlastung. Die Wirkungsweise der Überwachungseinrichtungen 27 ist analog zur Wirkungsweise der Überwachungseinrichtung 19.

Im einfachsten Fall ist jeder Diodengruppe 11 jeweils eine Teilschalteinrichtung zugeordnet. Alternativ ist es jedoch ebenso möglich, dass nur einigen der Diodengruppen 11 jeweils eine Teilschalteinrichtung zugeordnet ist und anderen Diodengruppen 11 keine Teilschalteinrichtungen zugeordnet sind. Im letztgenannten Fall können über die Diodengruppen 11, denen keine Teilschalteinrichtungen zugeordnet sind, die angekoppelten Abschnitte 1 nur vorgeladen werden. Hingegen können die an diese Diodengruppen 11 angekoppelten Abschnitte 1 keine elektrische Energie in den Energieübertragungspfad 13 einspeisen. Falls derartige Diodengruppen 11 - also Diodengruppen 11 ohne zugeordnete Teilschalteinrichtung - vorhanden sind, ist es möglich, die entsprechenden Diodengruppen 11 entsprechend zu markieren, damit Fehlanschlüsse vermieden werden.

Analog zur Ausgestaltung von FIG 4 können auch bei der Ausgestaltung von FIG 5 dem Energieübertragungspfad 13 zusätzlich ein Widerstand 23 und eine dem Widerstand 23 zugeordnete weitere Schalteinrichtung 24 zugeordnet sein. Aufgrund des Vorhandenseins der Reihenschaltung des Widerstands 23 und der weiteren Schalteinrichtung 24 ist es ebenso wie bei FIG 4 möglich, die Vorladeschaltung 10 nach Bedarf alternativ zum Vorladen der Abschnitte 1 und zum Entladen der Abschnitte 1 zu verwenden, je nachdem, ob der Widerstand 23 über die weitere Schalteinrichtung 24 aktiviert wird oder deaktiviert bleibt. Der Energieübertragungspfad 13 kann somit bei geschlossener weiterer Schalteinrichtung 24 als Verbraucher wirken. Sofern jedoch Abschnitte 1 ausschließlich über Diodengruppen 11 an den Energieübertragungspfad 13 angekoppelt sind, ihnen also keine Teilschalteinrichtungen zugeordnet sind, können diese Abschnitte 1 über den Widerstand 23 jedoch nicht entladen werden.

Zusammengefasst betrifft die vorliegende Erfindung somit folgenden Sachverhalt:
Ein Gleichspannungsnetz weist eine Mehrzahl von Abschnitten 1 auf, die über ein jeweiliges Schaltorgan 5 einzeln oder gruppenweise miteinander verbindbar und voneinander trennbar sind. Eine Vorladeschaltung 10 weist Diodengruppen 11, eine Schalteinrichtung 12, einen Energieübertragungspfad 13 und eine Steuereinrichtung 14 auf. Jeweils einer der Abschnitte 1 des Gleichspannungsnetzes ist über jeweils mindestens eine der Diodengruppen 11 an den Energieübertragungspfad 13 angekoppelt. Der Energieübertragungspfad 13 ist für die Diodengruppen 11 einheitlich derselbe. Die Steuereinrichtung 14 übermittelt zum Vorladen von Abschnitten 1 ein Steuersignal S an die Schalteinrichtung 12. Die Schalteinrichtung 12 schaltet dadurch den Energieübertragungspfad 13 für alle an den Energieübertragungspfad 13 angekoppelten Abschnitte 1 leitend.

Die vorliegende Erfindung weist viele Vorteile auf. So ist es mittels der erfindungsgemäßen Vorladeschaltung beispielsweise möglich, mehrere Abschnitte 1 des Gleichspannungsnetzes gleichzeitig zu laden. Durch die Überwachungseinrichtungen 19, 27 wird hierbei gewährleistet, dass die Auslegungsgrenzen der Vorladeschaltung 10 nicht überschritten werden. Das System ist modular. Insbesondere können mehrere Vorladeschaltungen 10 verwendet werden. Beispielsweise ist es möglich, mehrere Vorladeschaltungen 10 einzusetzen, um den wirksamen Strom zu vergrößern. Auch ist es möglich, verschiedene Gruppen von Abschnitten 1 jeweils über eine eigene Vorladeschaltung 10 vorzuladen. Beispielsweise könnte eine Vorladeschaltung 10 mit den Abschnitten 1b bis 1h verbunden sein, eine andere Vorladeschaltung 10 mit den Abschnitten 1a, 1d und 1i bis 1m. Die Vorladeschaltungen 10 können hierbei eventuell unterschiedlich ausgestaltet sein, also beispielsweise je einmal gemäß FIG 4 und FIG 5. Im Falle der Ausgestaltung der Vorladeschaltung 10 gemäß FIG 5 ist es weiterhin möglich, eine eigene Energiequelle speziell zum Vorladen der Abschnitte 1 an den Energieübertragungspfad 13 anzukoppeln. Die Wicklung 25 zum Ankoppeln der Energiequelle kann in diesem Fall bezüglich ihrer Windungszahl an die Nennspannung der Energiequelle im Verhältnis zur Nennspannung des Gleichspannungsnetzes angepasst sein. Die Projektierung der Vorladeschaltung 10 ist sehr einfach. Die Dimensionierung der Vorladeschaltung 10 kann nach Bedarf erfolgen. Unabhängig von der Dimensionierung können jedoch sogar in den Abschnitten 1 enthaltene Batterien oder sonstige größere Energiespeicher vorgeladen werden.

Ein weiterer Vorteil besteht darin, dass die Diodengruppen 11 und hiermit korrespondierend die Eingänge der Vorladeschaltung 10 nicht auf die volle Leistung der Vorladeschaltung 10 ausgelegt werden müssen. Sofern sich die entsprechende Notwendigkeit ergibt, ist es beispielsweise möglich, einen bestimmten Abschnitt 1 des Gleichspannungsnetzes - beispielsweise den Abschnitt 1c - an zwei oder drei Diodengruppen 11 anzuschließen. Hierzu ein Zahlenbeispiel: Man nehme an, die Schalteinrichtung 12 und der Energieübertragungspfad 13 seien auf eine Energieübertragung von 1,5 kW dimensioniert, die Diodengruppen 11 jedoch nur für jeweils 500 W dimensioniert. Wenn in einem derartigen Fall ein bestimmter Abschnitt 1 des Gleichspannungsnetzes an drei Diodengruppen 11 angeschlossen wird, ist es möglich, zwischen diesem Abschnitt 1 des Gleichspannungsnetzes und der Vorladeschaltung 10 die volle Energieübertragung von 1,5 kW zu realisieren. Es ist sogar möglich, die Diodengruppen 11 unterschiedlich zu dimensionieren, beispielsweise eine Diodengruppe 11 für eine Energieübertragung von 1,0 kW und eine andere Diodengruppe 11 für eine
Energieübertragung von 500 W.

Weitere Vorteile bestehen darin, dass die Vorladung verlustarm ist und keine Spannungsregelung oder Koordination erforderlich ist. Die Abschnitte 1 werden immer auf die Spannung U des Abschnitts 1 mit der höchsten Spannung U geladen.

Weiterhin sind verschiedene weitere Ausgestaltungen möglich. So können beispielsweise die Spannungen der Abschnitte 1 innerhalb der Vorladeschaltung 10 gemessen und für Anzeige-, Diagnose- oder Steuerungszwecke verwertet werden oder an eine übergeordnete Einrichtung (beispielsweise ein Netzmanagement) übermittelt werden. Auch ist es möglich, eine Meldung abzugeben, wenn die Vorladung der Abschnitte 1 abgeschlossen ist. Auch ist es möglich, das Vorladen automatisch zu beenden, wenn die Einschaltdauer der Schalteinrichtung 12 einen vorgegebenen Wert überschreitet. Im Falle der Ausgestaltung gemäß FIG 4 ist es weiterhin möglich, das Vorladen automatisch zu beenden, wenn die über den Diodengruppen 11 abfallende Spannungsdifferenz einen Schwellenwert unterschreitet oder das sich an den Fußpunkten der Diodengruppen 11 einstellende Potenzial einen hinreichenden Abstand zum negativen Potenzial P2 aufweist. Das Starten der Vorladung kann inversen Bedingungen genügen. Um ein ständiges Hin- und Her-Schalten zu vermeiden, kann gegebenenfalls der jeweilige Schaltzustand der Vorladeschaltung 10 für eine Mindestzeit beibehalten werden oder ein Hystereseverhalten implementiert werden.

Weiterhin ist es möglich, in den Leitungen zwischen den Knotenpunkten 16 und den Abgriffen 17 Schalter anzuordnen. In diesem Fall kann mittels dieser Schalter eingestellt werden, ob der jeweilige Abschnitt 1 effektiv an die Vorladeschaltung 10 angeschlossen ist oder nicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorladeschaltung für eine Mehrzahl von Abschnitten (1) eines Gleichspannungsnetzes, die über ein jeweiliges Schaltorgan (5) einzeln oder gruppenweise miteinander verbindbar und voneinander trennbar sind,
- wobei die Vorladeschaltung Diodengruppen (11), eine Schalteinrichtung (12), einen Energieübertragungspfad (13) und eine Steuereinrichtung (14) aufweist,
- wobei die Diodengruppen (11) als Brückengleichrichter oder als Brückenzweig eines Brückengleichrichters ausgebildet sind,
- wobei jeweils einer der Abschnitte (1) des Gleichspannungsnetzes über jeweils mindestens eine der Diodengruppen (11) an den Energieübertragungspfad (13) angekoppelt ist,
- wobei der Energieübertragungspfad (13) für die Diodengruppen (11) einheitlich derselbe ist und
- wobei die Steuereinrichtung (14) zum Vorladen von über ihr jeweiliges Schaltorgan (5) von den anderen Abschnitten (1) getrennten Abschnitten (1) ein Steuersignal (S) an die Schalteinrichtung (12) übermittelt, so dass die Schalteinrichtung (12) den Energieübertragungspfad (13) für alle an den Energieübertragungspfad (13) angekoppelten Abschnitte (1) des Gleichspannungsnetzes leitend schaltet und
- wobei über die Diodengruppen (11) jeweils nur eines (P1) von zwei Potenzialen (P1, P2) des an die jeweilige Diodengruppe (11) angeschlossenen Abschnitts (1) an den Energieübertragungspfad (13) angekoppelt und die Schalteinrichtung (12) in dem Energieübertragungspfad (13) angeordnet ist oder
- wobei über die Diodengruppen (11) jeweils beide Potenziale (P1, P2) des an die jeweilige Diodengruppe (11) angeschlossenen Abschnitts (1) an den Energieübertragungspfad (13) angekoppelt sind, der Energieübertragungspfad (13) von den Diodengruppen (11) galvanisch getrennt ist und die Schalteinrichtung mehrere Teilschalteinrichtungen aufweist, die jeweils einer Diodengruppe (11) zugeordnet sind.

2. Vorladeschaltung nach Anspruch 1,
**dadurch gekennzeichnet,**
**dass** der Energieübertragungspfad (13) als induktiver Energieübertragungspfad ausgebildet ist.

3. Vorladeschaltung nach Anspruch 1 oder 2,
**dadurch gekennzeichnet,**
**dass** die Teilschalteinrichtungen von der Steuereinrichtung (14) einheitlich angesteuert werden.

4. Vorladeschaltung nach einem der vorhergehenden Ansprüche ,
**dadurch gekennzeichnet,**
**dass** die Teilschalteinrichtungen den an die jeweilige Diodengruppe (11) angeschlossenen Abschnitt (1) aufgrund des von der Steuereinrichtung (14) übermittelten Steuersignals (S) nach Art eines Wechselrichters an den Energieübertragungspfad (13) anschalten.

5. Vorladeschaltung nach einem der obigen Ansprüche,
**dadurch gekennzeichnet,**
**dass** dem Energieübertragungspfad (13) ein Widerstand (23) und eine dem Widerstand (23) zugeordnete weitere Schalteinrichtung (24) zugeordnet sind, so dass der Energieübertragungspfad (13) bei geschlossener weiterer Schalteinrichtung (24) als Verbraucher wirkt.

6. Gleichspannungsnetz,
- wobei das Gleichspannungsnetz eine Mehrzahl von Abschnitten (1) aufweist,
- wobei das Gleichspannungsnetz für die Abschnitte (1) jeweils ein Schaltorgan (5) aufweist, über das der jeweilige Abschnitt (1) mit den anderen Abschnitten (1) verbindbar und von ihnen trennbar ist,
- wobei das Gleichspannungsnetz eine Vorladeschaltung (10) nach einem der obigen Ansprüche aufweist und
- wobei die Abschnitte (1) des Gleichspannungsnetzes jeweils mit mindestens einer der Diodengruppen (11) der Vorladeschaltung (10) verbunden sind.

7. Gleichspannungsnetz nach Anspruch 6,
**dadurch gekennzeichnet,**
**dass** zumindest ein Teil der Schaltorgane (5) derart ausgebildet ist, dass sie je nach Schaltzustand des jeweiligen Schaltorgans (5) nur eines (P1) von zwei Potenzialen (P1, P2) der Abschnitte (1) voneinander trennen bzw. miteinander verbinden und das andere Potenzial (P2) der Abschnitte (1) permanent miteinander verbinden.

8. Gleichspannungsnetz nach Anspruch 6 oder 7,
**dadurch gekennzeichnet,**
**dass** zumindest ein Teil der Schaltorgane (5) derart ausgebildet ist, dass sie je nach Schaltzustand des jeweiligen Schaltorgans (5) beide Potenziale (P1, P2) der Abschnitte (1) voneinander trennen bzw. miteinander verbinden.

9. Gleichspannungsnetz nach Anspruch 6, 7 oder 8,
**dadurch gekennzeichnet,**
- **dass** die Schaltorgane (5) jeweils eine elektronische Schalteranordnung (6) und von der elektronischen Schalteranordnung (6) aus gesehen zumindest zum jeweils zugeordneten Abschnitt (1) hin einen elektromechanischen Schalter (7) aufweisen,
- **dass** zwischen der jeweiligen elektronischen Schaltanordnung (6) und dem jeweiligen elektromechanischen Schalter (7) ein jeweiliger Abgriff (17) angeordnet ist und
- **dass** die Abschnitte (1) über die Abgriffe (17) mit den Diodengruppen (11) der Vorladeschaltung (10) verbunden sind.

## Claims

1. Pre-charging circuit for a plurality of sections (1) of a DC voltage network, which sections (1) can be connected together and separated from each other individually or in groups via a respective switch element (5),
- wherein the pre-charging circuit has diode groups (11), a switch device (12), an energy transmission path (13) and a controller (14),
- wherein the diode groups (11) are embodied as bridge rectifiers or as a bridge branch of a bridge rectifier,
- wherein each of the sections (1) of the DC voltage network is coupled to the energy transmission path (13) via at least one respective diode group (11),
- wherein the energy transmission path (13) is consistently the same for the diode groups (11), and
- wherein the controller (14) transmits a control signal (S) to the switch device (12) in order to pre-charge sections (1) that are separated from the other sections (1) via their respective switch element (5), such that the switch device (12) switches the energy transmission path (13) so as to be conductive for all of the sections (1) of the DC voltage network that are coupled to the energy transmission path (13), and
- wherein in each case only one (P1) of two potentials (P1, P2) of the section (1) attached to the respective diode group (11) is coupled to the energy transmission path (13) via the diode groups (11) and the switch device (12) is arranged in the energy transmission path (13) or
- wherein in each case both potentials (P1, P2) of the section (1) connected to the respective diode group (11) are coupled to the energy transmission path (13) via the diode groups (11), the energy transmission path (13) is electrically isolated from the diode groups (11) and the switch device (12) has a number of partial switch devices, each of which is assigned to a diode group (11).

2. Pre-charging circuit according to claim 1,
**characterised in that**
the energy transmission path (13) is designed as an inductive energy transmission path.

3. Pre-charging circuit according to claim 1 or 2,
**characterised in that**
the partial switch devices are activated in a consistent manner by the controller (14).

4. Pre-charging circuit according to one of the preceding claims,
**characterised in that**
the partial switch devices connect the section (1) which is attached to the respective diode group (11) to the energy transmission path (13) in the manner of an inverter as a result of the control signal (S) transmitted by the controller (14) .

5. Pre-charging circuit according to one of the preceding claims,
**characterised in that**
a resistor (23) and a further switch device (24) assigned to the resistor (23) are assigned to the energy transmission path (13), such that the energy transmission path (13) acts as a consumer unit when the further switch device (24) is closed.

6. DC voltage network,
- wherein the DC voltage network has a plurality of sections (1),
- wherein the DC voltage network has a switch element (5) for each of the sections (1), via which the respective section (1) can be connected to and separated from the other sections (1),
- wherein the DC voltage network has a pre-charging circuit (10) according to one of the preceding claims, and
- wherein the sections (1) of the DC voltage network are each connected to at least one of the diode groups (11) of the pre-charging circuit (10).

7. DC voltage network according to claim 6,
**characterised in that**
at least a proportion of the switch elements (5) are designed such that, depending on the switching status of the respective switch element (5), they separate or connect only one (P1) of two potentials (P1, P2) of the sections (1) from or to each other respectively, and they connect the other potential (P2) of the sections (1) together permanently.

8. DC voltage network according to claim 6 or 7,
**characterised in that**
at least a proportion of the switch elements (5) are designed such that, depending on the switching status of the respective switch element (5), they separate or connect both potentials (P1, P2) of the sections (1) from or to each other respectively.

9. DC voltage network according to claim 6, 7 or 8,
**characterised in that**
- each of the switch elements (5) has an electronic switch arrangement (6) and, viewed from the electronic switch arrangement (6), an electromechanical switch (7) at least in the direction of the respectively assigned section (1),
- a respective tap (17) is arranged between the respective electronic switch arrangement (6) and the respective electromechanical switch (7), and
- the sections (1) are connected to the diode groups (11) of the pre-charging circuit (10) via the taps (17).

## Revendications

1. Circuit de précharge d'une pluralité de sections (1) d'un réseau de tension continue, qui peuvent être reliées entre elles ou séparées les unes des autres, individuellement ou en groupes, par un organe (5) de coupure respectif,
- dans lequel le circuit de précharge a des groupes (11) de diodes, un dispositif (12) de coupure, un trajet (13) de transport d'énergie et un dispositif (14) de commande,
- dans lequel les groupes (11) de diodes sont constitués sous la forme d'un redresseur à pont ou sous la forme d'une branche de pont d'un redresseur à pont,
- dans lequel, respectivement, l'une des sections (1) du réseau de tension continue est connectée au trajet (13) de transport d'énergie par, respectivement, au moins l'un des groupes (11) de diodes,
- dans lequel le trajet (13) de transport d'énergie est unitairement le même pour les groupes (11) de diodes et
- dans lequel le dispositif (14) de commande transmet, pour la précharge de sections (1) séparées des autres sections (1) par son organe (5) respectif de coupure, un signal (S) de commande au dispositif (12) de coupure, de manière à ce que le dispositif (12) de coupure rende passant le trajet (13) de transport d'énergie pour toutes les sections, connectées au trajet (13) de transport d'énergie, du réseau de tension continue et
- dans lequel, par les groupes (11) de diodes, respectivement, seulement l'un (P1) de deux potentiels (P1, P2) de la section (1) connectée au groupe (11) de diodes respectif est connecté au trajet (13) de transport d'énergie et le dispositif (12) de coupure est monté dans le trajet (13) de transport d'énergie ou
- dans lequel, par les groupes (11) de diodes, respectivement, deux potentiels (P1, P2) de la section (1) connectée au groupe (11) de diodes respectif sont appliqués au trajet (13) de transport d'énergie, le trajet (13) de transport d'énergie est séparé galvaniquement des groupes (11) de diodes et le dispositif de coupure a plusieurs dispositifs partiels de coupure, qui sont associés chacun à un groupe (11) de diodes.

2. Circuit de précharge suivant la revendication 1,
**caractérisé**
**en ce que** le trajet (13) de transport d'énergie est constitué sous la forme d'un trajet de transport d'énergie inductif.

3. Circuit de précharge suivant la revendication 1 ou 2,
**caractérisé**
**en ce que** les dispositifs partiels de coupure sont commandés unitairement par le dispositif (14) de commande.

4. Circuit de précharge suivant l'une des revendications précédentes,
**caractérisé**
**en ce que** les dispositifs partiels de coupure branchent, sur le trajet (13) de transport d'énergie à la manière d'un onduleur, la section (1) connectée au groupe (11) de diodes respectif, sur la base du signal (S) de commande transmis par le dispositif (14) de commande.

5. Circuit de précharge suivant l'une des revendications précédentes,
**caractérisé**
**en ce qu'**une résistance (23) et un autre dispositif (24) de coupure associé à la résistance (23) sont associés au trajet (13) de transport d'énergie, de manière à ce que le trajet de transport d'énergie agisse en consommateur, lorsque l'autre dispositif (24) de coupure est fermé.

6. Réseau de tension continue,
- dans lequel le réseau de tension continue a une pluralité de sections (1),
- dans lequel le réseau de tension continue a, pour les sections (1), respectivement, un organe (5) de coupure, par lequel la section (1) respective peut être reliée aux autres sections (1) et en être séparée,
- dans lequel le réseau de tension continue a un circuit (10) de précharge suivant l'une des revendications précédentes et
- dans lequel les sections (1) du réseau de tension continue sont reliées, respectivement, à au moins l'un des groupes (11) de diodes du circuit (10) de précharge.

7. Réseau de tension continue suivant la revendication 6,
**caractérisé**
**en ce qu'**au moins une partie des organes (5) de coupure est constituée de manière à ce que, suivant l'état de coupure de l'organe (5) de coupure respectif, ils séparent l'un de l'autre, ou relient entre eux, seul l'un (P1) de deux potentiels (P1, P2) des sections (1) et relient entre eux, de manière permanente, l'autre potentiel (P2) des sections (1).

8. Réseau de tension continu suivant la revendication 6 ou 7,
**caractérisé**
**en ce qu'**au moins une partie des organes (5) de coupure est constituée de manière à ce que, suivant l'état de coupure de l'organe (5) de coupure respectif, les deux potentiels (P1, P2) des sections (1) sont séparés l'un de l'autre ou reliés entre eux.

9. Réseau de tension continu suivant la revendication 6, 7 ou 8,
**caractérisé**
- **en ce que** les organes (5) de coupure ont, respectivement, un agencement (6) électronique de coupure et, considéré à partir de l'agencement (6) électronique de coupure, ont au moins un interrupteur (7) électromécanique vers la section (1) associée, respectivement,
- **en ce que** une prise (17) respective est montée entre l'agencement (6) électronique de coupure respectif et l'interrupteur (7) électromécanique respectif et
- **en ce que** les sections (1) sont reliées par les prises (17) aux groupes (11) de diodes du circuit (10) de précharge.
